# EUROPEAN PATENT APPLICATION

(11) **EP 3 420 814 A1**
(43) Date of publication of application: **02.01.2019**
(21) Application number: 17756103.2
(22) Date of filing: 31.01.2017
(51) Int. Cl.: A01K 85/16, A01K 85/02

(54) **FISHING LURE**

(30) Priority: 22.02.2016 JP 2016030893
(71) Applicant: Studio Composite Co., Ltd., Mobara-shi, Chiba 297-0012 (JP)
(72) Inventor: SEKIGUCHI, Kazushige, Mobara-shi, Chiba 297-0012 (JP)
(74) Representative: Winter, Brandl, Fürniss, Hübner, Röss, Kaiser, Polte - Partnerschaft mbB
(86) International application number: PCT/JP2017/003327
(87) International publication number: WO 2017/145661

(57) **Abstract**

Hooks 30 of a lure body 10 are each formed of a first hook 31 and a second hook 32 each of which has a substantially J-shape and the respective upper ends of which are engaged with a connection ring 21 in a free-moving manner, and the hooks 31, 32 are bundled with a connection body 33 that is expandable and contractible. According to this configuration, the first hook 31 and the second hook 32 move independently of each other without regard to the motion of the other, and a fish is caught with the two hooks. Accordingly, a fish having bit the lure can be unfailingly pulled in even if the fish fights or is of a large size.

## Description

### BACKGROUND OF INVENTION

### Field of the Invention

The present invention relates to a fishing lure for lure fishing, and more particularly, to a fishing lure, called a plug, a minnow, a jig, or a spoon, including a lure body that resembles a small fish.

### Background Art

A common fishing lure widely used for lure fishing, called a plug, a minnow, a jig, or a spoon, may include a lure body that resembles a small fish, a small creature, or an insect, and a hook hanging at the belly and tail of the lure body. The hook attached to the lure body has its point bent in a J-shape to pierce the mouth or a gill of a fish upon contact. The hook also has a barb at the point to secure the fish and prevent unhooking.

To hold a fish biting in any direction, many lures have a hook having three points at equal intervals, or three points arranged radially at about 120-degree intervals around a shank connected to the lure body as described in, for example, Patent Literature 1 or 2. As described in Patent Literature 3, hooks used widely may have two points to reduce noise caused when the points hit the lure body.

### CITATION LIST

### PATENT LITERATURE

Patent Literature 1: Japanese Patent Application Publication No. 2010-75167
Patent Literature 2: Japanese Patent Application Publication No. 2012-249620
Patent Literature 3: Japanese Patent Application Publication No. 2009-178115

### SUMMARY OF INVENTION

### TECHNICAL PROBLEM

Such known hooks with three or two points as described in Patent Literatures 1 to 3 have fixed intervals (angles) between the points. A fish biting (hooked at) one point is unlikely to be hooked further at other points. A fish hooked at one point can wriggle off the hook and escape after its shallowly hooked part (mouth or gill) is torn.

A fish caught on two or more points can also have the same consequence, because the points are at fixed intervals and a force concentrates on either of these points without being dispersed to each point. A large fish biting the hook can stretch or break the points with its weight and resisting force, and may be unhooked from the points.

Accordingly, the present invention has been created in response to the above issue, and is directed to a fishing lure for reliably catching a fish that has bitten, without allowing the wriggling or large fish to escape.

### SOLUTION TO PROBLEM

In response to the above issue, a first aspect of the present invention provides a fishing lure including a lure body including a hook eye, and a hook coupled to the hook eye with a coupling ring. The hook includes a first hook and a second hook that are tied together with an expansible tie. Each of the first hook and the second hook has substantially a J-shape and has at least an upper end swingably engaged with the coupling ring.

This structure allows the first hook and the second hook to move independently of each other, and increases the likelihood that a fish hooked on, for example, one of the hooks has another part further hooked on the other hook when the fish wriggles. The two independent hooks hold the fish while following the movement of the wriggling fish, and thus receive a force dispersed equally to the two hooks. This structure prevents a fish from escaping after its shallowly hooked part is torn, or prevents a point from being stretched or broken by the weight or the resisting force of the fish. The hook may include at least the first hook and the second hook, and may further include a third hook, a fourth hook, or more hooks of the same shape that are tied together with an expansible tie.

A fishing lure according to a second aspect of the present invention is the fishing lure according to the first aspect in which the lure body resembles a shape of a fish, a small creature, or an insect, and the first hook and the second hook are tied together to have points obliquely angled rightward and leftward and directed toward a front of the lure body. This structure has the points directed in different directions to allow a fish to be more easily hooked on any of the hooks. The points of the hook moving toward the lure body with the stream of water are less likely to or less frequently to hit the lure body. This structure thus reduces ticking noise that can alert fish. This structure also prevents the lure body from being damaged unnecessarily.

A fishing lure according to a third aspect of the present invention is the fishing lure according to the first or second aspect, in which the tie includes a rubber tube, a heat-shrinkable resin tube, or a heat-shrinkable plastic tape. In this structure, the tie ties the two hooks together to maintain their positional relationship. When the hooks receive a predetermined force or larger, the tie deforms to allow each of the hooks to move independently without being restricted by the other hook. The tie tube formed from a soft material and covering the first hook and the second hook absorbs the force of the hooks applied to the lure body when the hooks hit the lure body, and reduces the contact noise.

The fishing lure according to one or more embodiments of the present invention includes two hooks to hold a fish that is hooked on one of the hooks and has another part further hooked on the other hook when the fish wriggles. This structure prevents a fish from escaping after its shallowly hooked part is torn, or prevents a point from being stretched or broken by the weight or the resisting force of the fish. The hooks move independently of each other to follow the movement of the fish, and to be wedged into the fish to minimize the damage on the mouth or a gill pierced by the hooks. This structure thus reliably catches a fish that has bitten, without allowing the wriggling or large fish to escape.

### BRIEF DESCRIPTION OF THE DRAWINGS

Fig. 1 is a side view of a fishing lure 100 according to one embodiment of the present invention.
Fig. 2A is a side view of a hook 30, and Fig. 2B is a front view of the hook 30.
Fig. 3A is a plan view of a second hook 32, and Fig. 3B is a plan view of a first hook 31.
Figs. 4A, 4B, 4C, and 4D are diagrams describing example assembly of the fishing lure 100 according to one or more embodiments of the present invention.
Figs. 5A, 5B, and 5C are diagrams describing the effects of the fishing lure 100 according to one or more embodiments of the present invention.
Fig. 6 is a diagram describing the movement of the fishing lure 100 according to one or more embodiments of the present invention.
Fig. 7 is a diagram describing a known fishing lure.
Fig. 8A is a side view of a hook 30 according to another embodiment, and Fig. 8B is a front view of the hook 30.
Fig. 9A is a plan view of a second hook 32 according to another embodiment, and Fig. 9B is a plan view of a first hook 31 according to another embodiment.
Fig. 10 is a side view of a fishing lure 100 according to another embodiment of the present invention.
Fig. 11 is a partially enlarged view of a portion S in Fig. 10.

### DETAILED DESCRIPTION

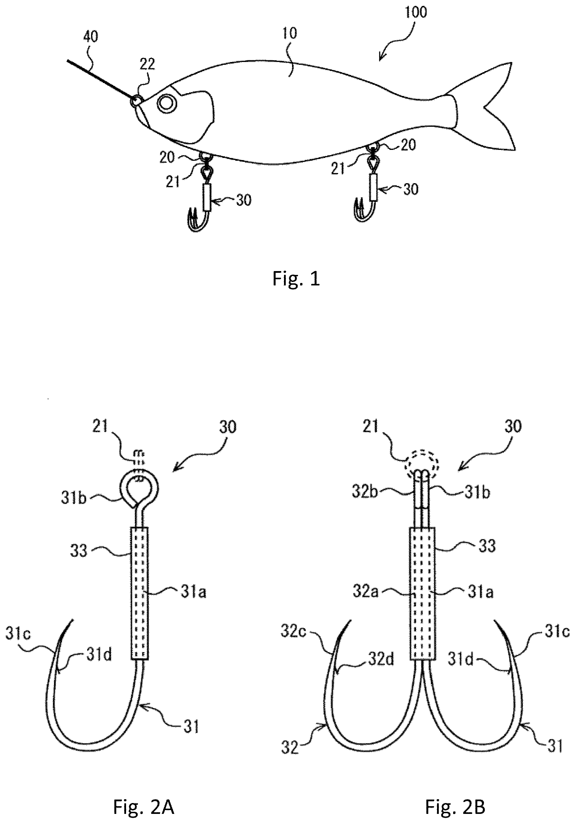

One or more embodiments of the present invention will now be described below with reference to the accompanying drawings. Fig. 1 shows a fishing lure 100 according to one embodiment of the present invention. As shown in the figure, the fishing lure 100 includes a lure body 10 that resembles the shape of a fish, two hook eyes 20 one at the belly and the other near the tail of the lure body 10, and two hooks 30 that are swingably engaged with the corresponding hook eyes 20 with two coupling rings 21. The coupling rings 21 are, for example, welded or split rings.

The lure body 10 is made of plastic, metal, or rubber, and resembles, for example, an actual fish, small creature, or insect. The lure body 10 is pulled underwater or near the water surface by a line 40 connected to a line eye 22 attached near the mouth to attract any nearby fish. The lure body 10 may have a split tail part that can swing right and left.

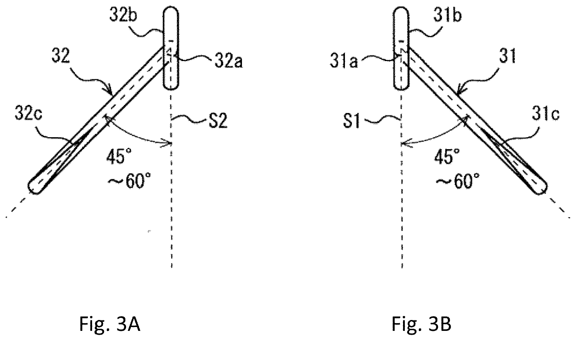

As shown in Figs. 2A and 2B, the hook 30 includes a first hook 31 and a second hook 32 that are tied together by a tie 33. The first hook 31 is formed from a high-strength wire, such as a carbon steel wire. The first hook 31 includes a vertically extending shank 31a, a ring hanging portion 31b at the top of the shank 31a, and a point 31c bent in a J-shape at the lower end of the shank 31a. The shank 31a, the hanging portion 31b, and the point 31c are integral with one another. When the ring hanging portion 31b is viewed from above as shown in Fig. 3B, the bent point 31c is angled rightward about 45 to 60 degrees relative to a ring plane S1.

As shown in Fig. 2B, similarly to the first hook 31, the second hook 32 also includes a vertically extending shank 32a, a ring hanging portion 32b at the top of the shank 32a, and a point 32c bent in a J-shape at the lower end of the shank 32a. The shank 32a, the hanging portion 32b, and the point 32c are integral with one another. When the ring hanging portion 32b is viewed from above as shown in Fig. 3A, the bent point 32c is angled leftward about 45 to 60 degrees relative to a ring plane S2, unlike the first hook 31. The angle may not be 45 to 60 degrees and may vary depending on the width or the shape of the lure.

As shown in Fig. 2B, when the hanging portions 31b and 32b of the first and second hooks 31 and 32 are arranged side by side and tied together, the points 31c and 32c are each obliquely angled rightward or leftward about 45 to 60 degrees, or open outward. The hooks 31 and 32 have barbs 31d and 32d on the inner sides of the points 31c and 32c to secure a fish and prevent unhooking.

The tie 33, which ties the first and second hooks 31 and 32 together, is formed from an expansible material, such as a rubber tube, or a heat-shrinkable resin tube or a heat-shrinkable plastic tape. The rubber tube may be any such material including natural rubber or synthetic rubber that easily expands in diameter under a certain degree of force and returns to the original diameter when the force is removed. The heat-shrinkable resin tube may be any such material having the same properties after thermally shrunk, including a shape-memory plastic tube that shrinks into a memorized shape under heat. More specifically, the tube may be a heat-shrinkable tube made of, for example, polyolefin, fluorine polymers, or thermoplastic elastomers used as an electrical insulating material.

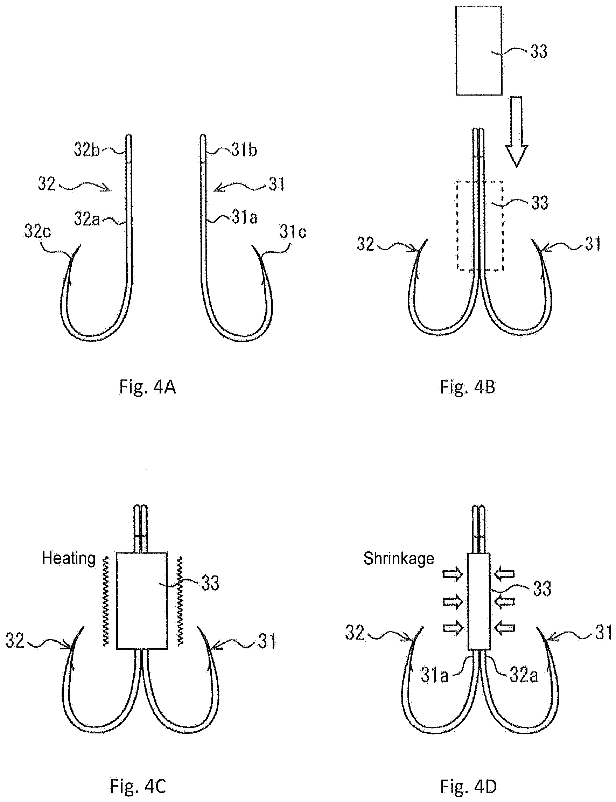

A method for assembling the fishing lure 100 with this structure will now be described. For example, as shown in Fig. 4A, the first and second hooks 31 and 32 are combined together to have the points 31c and 32c facing away from each other and the hanging portions 31b and 32b arranged side by side. The shanks 31a and 32a are then covered with the tie 33 having an inner diameter larger than the outer diameter of the hanging portions 31b and 32b before being thermally shrunk (refer to Fig. 4B). The tie 33 is then heated externally with, for example, a dryer as shown in Fig. 4C to shrink under the heat. The tie 33 thus tightly adheres to the shanks 31a and 32a and ties them in a bundle, as shown in Fig. 4D.

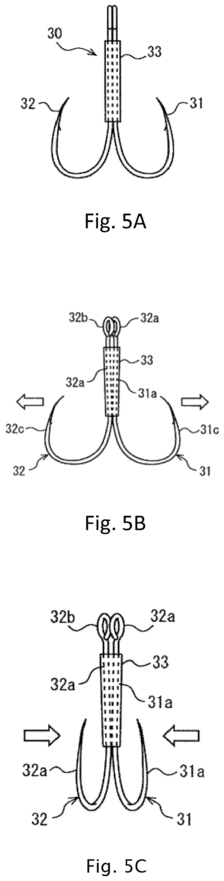

The hanging portions 31b and 32b are thus arranged side by side, and the points 31c and 32c are each angled outward about 45 to 60 degrees relative to the ring plane S1 or S2 of the hanging portion 31b or 32b. The first and second hooks 31 and 32 are held in this state, as shown in Fig. 5A, while receiving no external force. Each of the first and second hooks 31 and 32, which are originally separate, can freely move (rotate) about the tubular tie 33 independently of the state of the other hook.

Fig. 5B shows the first and second hooks 31 and 32 having their points 31c and 32c moved outward away from each other. Fig. 5C shows the first and second hooks 31 and 32 having their points 31c and 32c moved inward toward each other. Naturally, one of the hooks 31 and 32 may be moved independently. When the points 31c and 32c are redirected by the external force, the ring hanging portions 31b and 32b interfere with each other. The shanks 31a and 32a thus move away from each other as shown in Figs. 5B and 5C to temporarily increase the diameter of the tubular tie 33. When the external force is removed, the shrinkage force of the tie 33 places the shanks 31a and 32a into tight contact with each other at the original positions, as shown in Fig. 5A.

When the hook 30 having the above structure is attached to the lure body 10 with the points 31c and 32c facing toward the line 40 as shown in Fig. 1, both the first hook 31 and the second hook 32 can move independently of each other. This structure highly increases the likelihood that a fish hooked on one of the hooks 31 and 32, or for example hooked on the first hook 31, has another part further hooked on the second hook 32 when the fish wriggles and contacts the second hook 32.

The first and second hooks 31 and 32 have their points 31c and 32c each bent in a J-shape and have the barbs 31d and 32d on the inner sides of the corresponding points 31c and 32c. A fish hooked on the points 31c and 32c are unhooked less easily. Under an external force, each of the first and second hooks 31 and 32 moves independently of the other hook without being restricted by the position or the movement of the other hook. Once a fish is hooked, the first and second hooks 31 and 32 more deeply pierce the mouth or a gill of the fish as the fish wriggles. The two hooks 31 and 32 moving independently of each other thus securely hold the fish. This structure prevents the fish from escaping after its shallowly hooked part on the first or second hook 31 or 32 is torn, or prevents the point from being stretched or unhooked by the weight or the resisting force of the fish.

The hook 30 having the above structure can reliably catch a fish that has bitten, without allowing the wriggling or large fish to escape. Once unhooked from the caught fish, the hook 30 is released from the external force, allowing the tubular tie 33 to return to the original state with its shrinkage force. The hook 30 naturally returns to the original state with its shrinkage force, and is thus immediately usable again without any handling, such as adjustment of the hook position.

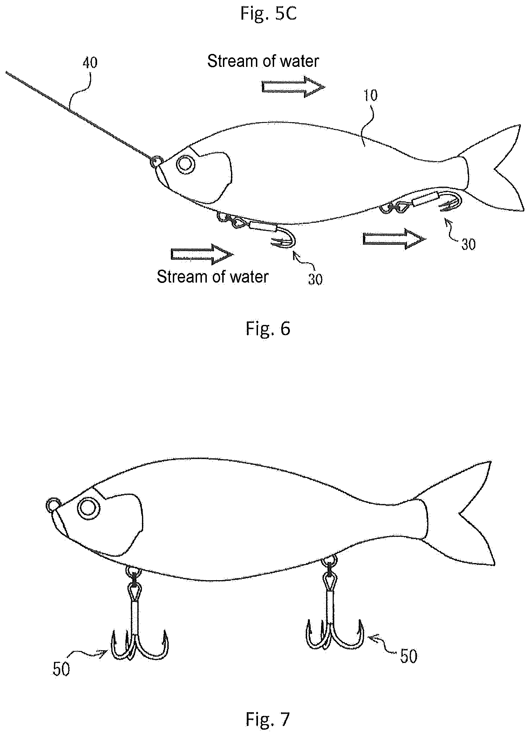

When placed underwater, the first and second hooks 31 and 32 have their points 31c and 32c directed in different directions. This structure can more easily hook a nearby fish on one of the hooks 31 and 32. The points 31c and 32c attached to face toward the line 40 are less likely to or less frequently to hit the lure body 10 when the first and second hooks 31 and 32 move toward the lure body 10 with the stream of water, as shown in Fig. 6. This structure thus reduces undesired ticking noise, and prevents the lure body 10 from being damaged unnecessarily.

More specifically, as shown in Fig. 7, a known hook 50 with three points spaced at fixed intervals of 120 degrees has any of the points constantly hitting the lure body 10 and causing noise under the stream of water. The lure 100 according to one or more embodiments of the present invention prevents this inconvenience.

A bundle of the first and second hooks 31 and 32 tied with the tubular tie 33 formed from a soft material absorbs and reduces contact noise when hitting the lure body 10, and thus is less likely to alert fish. This structure receives less water resistance than the known hook 50 including three points, and negligibly disturbs the movement of the lure body 10 underwater. Although the present embodiment describes the structure including the hooks 30 at the belly and the tail of the lure body 10, the hook 30 may be located at one of these parts or combined with the known hook 50 shown in Fig. 7.

The known hook 50 becomes unusable and is to be entirely replaced once any one of the points is damaged or stretched. In contrast, the hook 30 according to one or more embodiments of the present invention remains usable, with one hook that has become unusable to be simply replaced with a new hook by removing the tie 33. This structure is highly reusable and generates less waste.

As described above, the lure 100 according to one or more embodiments of the present invention includes the first hook 31 and the second hook 32, which independently pierce, for example, the mouth of a fish. Once hooked, the fish is not easily unhooked when the fish wriggles. The first hook 31 and the second hook 32 may eliminate the barbs 31d and 32d (can be barbless) to minimize damage on the caught fish. The hooks are thus suitable for catch-and-release sport fishing. The hooks do not reduce the commercial value of the caught fish for transfer or sales.

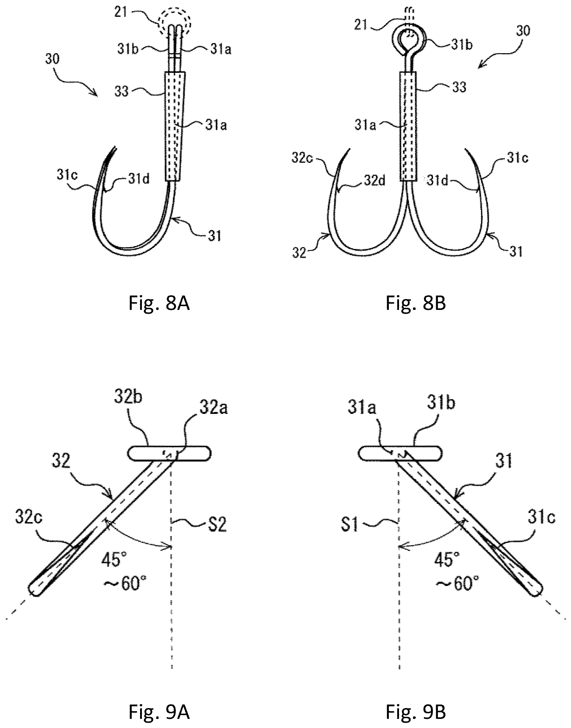

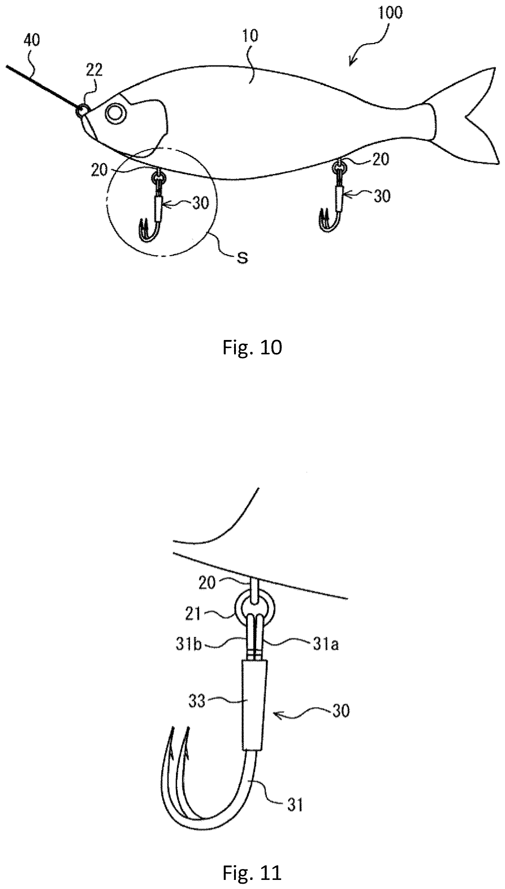

The lure body 10 having the eyes 20 directed perpendicularly to the longitudinal direction of the lure body 10 as shown in Fig. 11 may have the ring hanging portions 31b and 32b of the first and second hooks 31 and 32 that are directed parallel to the hook eyes 20 of the lure body 10, as shown in Figs. 8A to 9B. This structure can have the points 31c and 32c of the first and second hooks 31 and 32 constantly facing toward the front of the lure body 10 as shown in Figs. 10 and 11 when not bitten by a fish. The hook 30 may include at least the first and second hooks 31 and 32, and may additionally include a third hook, a fourth hook, and more hooks of the same shape that are tied together with an expansible tie.

### REFERENCE SIGNS LIST

- 100: fishing lure
- 10: lure body
- 20: hook eye
- 21: coupling ring
- 22: line eye
- 30: hook
- 31: first hook
- 31a, 32a: shank
- 31b, 32b: hanging portion
- 31c, 32c: point
- 31d, 32d: barb
- 32: second hook
- 33: tie
- 40: line
- 50: known hook

## Claims

1. A fishing lure, comprising:
a lure body including a hook eye; and
a hook coupled to the hook eye with a coupling ring,
the hook including a first hook and a second hook that are tied together with an expansible tie, each of the first hook and the second hook having substantially a J-shape and having at least an upper end swingably engaged with the coupling ring.

2. The fishing lure according to claim 1, wherein
the lure body resembles a shape of a fish, a small creature, or an insect, and
the first hook and the second hook are tied together to have points obliquely angled rightward and leftward and directed toward a front of the lure body.

3. The fishing lure according to claim 1 or claim 2, wherein
the tie comprises a rubber tube, a heat-shrinkable resin tube, or a heat-shrinkable plastic tape.
